# EUROPÄISCHE PATENTSCHRIFT

(11) **EP 1 812 720 B1**
(45) Veröffentlichungstag und Bekanntmachung des Hinweises auf die Patenterteilung: **07.01.2009**
(21) Anmeldenummer: 05802356.5
(22) Anmeldetag: 05.10.2005
(51) Int. Cl.: F16B 21/08

(54) **BEFESTIGUNGSVORRICHTUNG**
FIXING DEVICE
DISPOSITIF DE FIXATION

(30) Priorität: 12.11.2004 DE 102004054689
(43) Veröffentlichungstag der Anmeldung: 01.08.2007
(73) Patentinhaber: A. RAYMOND ET CIE, 38000 Grenoble (FR)
(72) Erfinder: LEGAT, Jean-Jacques, F-38690 Grenoble (FR); BOUBTANE, Mohieddine, F-38170 Seyssinet-Pariset (FR); RAYMOND, Antoine, F-38330 Biviers (FR)
(74) Vertreter: Rüttgers, Joachim
(86) Internationale Anmeldenummer: PCT/EP2005/010709
(87) Internationale Veröffentlichungsnummer: WO 2006/050774

(56) Entgegenhaltungen:
- FR-A- 2 142 200
- GB-A- 1 348 753

## Beschreibung

Die Erfindung betrifft eine Befestigungsvorrichtung gemäß dem Oberbegriff des Patentanspruches 1.

FR 2 142 200 A offenbart eine derartige Befestigungsvorrichtung mit zwei einander gegenüberliegenden, verhältnismäßig massiven Randstegen eines Rastfuß ist, die jeweils einem Ende mit einem Kopfteil und mit ihrem jeweils anderen Ende über einen Fußsteg miteinander verbunden sind. Zwischen den Randstegen sind jeweils mit einem Ende an dem Fußsteg angeformte, radial über die Randstege überstehende Flügel vorhanden, deren anderes Ende frei ist. Dadurch ist ebenfalls eine gewisse Anpassungsfähigkeit an verschiedene Durchmesser von Ausnehmungen erzielt, in die die Befestigungsvorrichtung eingefügt werden soll.

GB 1 348 753 A offenbart eine Befestigungsvorrichtung mit einem Rastfuß zum Einfügen in eine Ausnehmung, wobei der Rastfuß einen Fußschaft mit einer Anzahl von Randstegen aufweist, zwischen denen ein Freiraum ausgebildet ist und die sich von dem Kopfteil wegweisend erstrecken. Bei der gattungsgemäßen Befestigungsvorrichtung sind zwei Randstege ausgebildet, wobei ein erster Randsteg mit einem Kopfteil verbunden und der andere zweite Randsteg mit einem über einen dem Kopfteil gegenüberliegenden Fußsteg mit dem ersten Randsteg verbunden ist, während das andere Ende des zweiten Randsteges frei ist. Dadurch ist eine gewisse Anpassungsfähigkeit an verschiedene Durchmesser von Ausnehmungen erzielt, in die die Befestigungsvorrichtung eingefügt werden soll.

Eine weitere Befestigungsvorrichtung ist aus DE 100 06 593 A1 bekannt. Diese Befestigungsvorrichtung verfügt über einen Rastfuß zum Einfügen in eine Ausnehmung, der einen sich von einem Kopfteil wegweisend erstreckenden plattenartigen Fußschaft aufweist, an dessen Randseiten zwei Flügel angesetzt sind.

Der Erfindung liegt die Aufgabe zugrunde, eine Befestigungsvorrichtung der eingangs genannten Art anzugeben, bei der der Rastfuß bei einer relativ hohen Verspannkraft eine hohe Flexibilität und eine verhältnismäßig leicht durchzuführende Einfügbarkeit aufweist.

Diese Aufgabe wird bei einer Befestigungsvorrichtung der eingangs genannten Art erfindungsgemäß mit den kennzeichnenden Merkmalen des Patentanspruches 1 gelöst.

Dadurch, dass bei der erfindungsgemäßen Befestigungsvorrichtung an den Randstegen vorzugsweise rechtwinklig von den Randstegen abstehende und sich kreisbogenartig um den Fußschaft erstreckende Flügel angesetzt sind, wobei die Randstege sowie die Flügel gemäß den weiteren erfindungsgemäßen Merkmale ausgebildet sind, lässt sich die erfindungsgemäße Befestigungsvorrichtung mit relativ hohen Verspannkräften verhältnismäßig einfach in auch knapp dimensionierte Ausnehmungen einfügen sowie in verhältnismäßig groß dimensionierten Ausnehmungen trotzdem sicher verankern

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Befestigungsvorrichtung mit einem Rastfuß und
- Fig. 2: einen Querschnitt durch den Rastfuß des Ausführungsbeispiels gemäß Fig. 1.

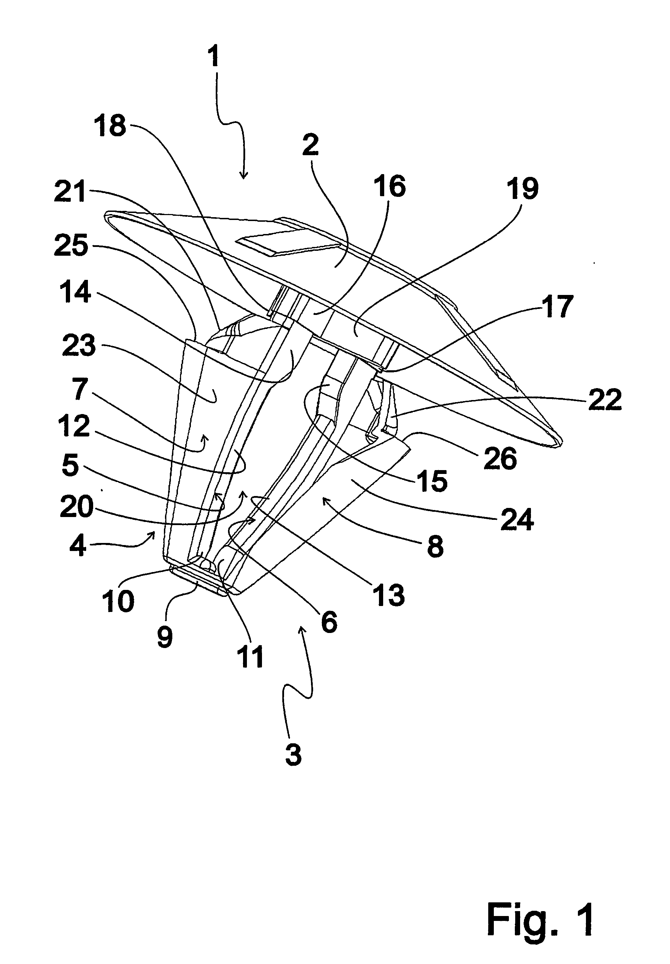

Fig. 1 zeigt in einer perspektivischen Ansicht ein Ausführungsbeispiel einer erfindungsgemäßen Vorrichtung, die über ein Kopfteil 1 mit einem trichterartigen Abdeckschirm 2 verfügt, der in Richtung eines Rastfußes 3 der erfindungsgemäßen Vorrichtung geöffnet ist. Der Rastfuß 3 ist in eine Ausnehmung einer in Fig. 1 nicht dargestellten, beispielsweise zweiteiligen Trägeranordnung mit zwei mit der Befestigungsvorrichtung zu verbindenden Teilen einfügbar und verfügt bei dem erläuterten Ausführungsbeispiel über einen sich von dem Kopfteil 1 wegweisend erstreckenden Fußschaft 4, der einen ersten Randsteg 5 und einen zweiten Randsteg 6 aufweist. Die Randstege 5, 6 sind einander gegenüberliegend angeordnet. An die außenseitige Randseite des ersten Randsteges 5 ist ein erster Flügel 7 angesetzt, und an die außenseitige Randseite des zweiten Randsteges 6 ist entsprechend ein zweiter Flügel 8 angeformt.

Die Randstege 5, 6 sind an ihren von dem Kopfteil 1 wegweisenden Enden über einen Fußsteg 9 des Fußschaftes 4 miteinander verbunden und weisen an den Fußsteg 9 angesetzte, in wesentlichen parallel zueinander verlaufende kurze Fußabschnitte 10, 11, jeweils einen längeren Mittenabschnitt 12, 13, die voneinander weg nach außen gebogen sind, und den Fußabschnitten 10, 11 gegenüberliegende, wieder kürzere Kopfabschnitte 14, 15 auf. Die Kopfabschnitte sind mit einer Materialstärke ausgebildet, die größer als die jeweilige Materialstärke der Fußabschnitte 10, 11 und der Mittenabschnitte 12, 13 ist, wobei die Materialzugabe auf den aufeinander zu weisenden Innenseiten der Kopfabschnitte 14, 15 vorliegt. Die Kopfabschnitte 14, 15 sind an Verbindungsstücke 16, 17 angesetzt, die mit der Innenseite des Abdeckschirmes 2 in Verbindung stehen. Zwischen den Verbindungsstücken 16, 17 sind Stabilisierstücke 18, 19 vorhanden, die zusammen mit den Verbindungsstücken 16, 17 den Abdeckschirm 2 im Mittenbereich stabilisieren und eine stabile Anordnung der Befestigungsvorrichtung in der Ausnehmung unterstützen. Somit ist in dem Fußschaft 4 ein Freiraum 20 ausgebildet, der sich von dem Kopfteil 1 bis zu dem Fußsteg 9 erstreckt und an zwei Längsseiten von den Randstegen 5, 6 begrenzt ist.

Die Flügel 7, 8 der erfindungsgemäßen Befestigungsvorrichtung sind jeweils mit einem an den Kopfabschnitt 14, 15 des jeweiligen Randsteges 5, 6 angesetzten Eintauchabschnitt 21, 22 ausgebildet, der sich in der von dem Kopfteil 1 wegweisenden Richtung im Umfang erweitert. Von dem jeweiligen Eintauchabschnitt 21, 22 setzt sich in Richtung des jeweiligen Fußabschnittes 10, 11 jeweils ein Durchgriffsabschnitt 23, 24 fort, deren Umfänge sich in Richtung der Fußabschnitte 10, 11 wieder verringern. In Übergangsbereich der Eintauchabschnitte 21, 22 und der Durchgriffsabschnitte 23, 24 mit dem größten Umfang des Rastfußes 3 sind in Richtung des Kopfteiles 1 ausgerichtete Rastflächen 25, 26 ausgebildet, die bei bestimmungsgemäßer Anordnung der erfindungsgemäßen Befestigungsvorrichtung die Trägeranordnung hintergreifen, so dass die Befestigungsvorrichtung fest mit der Trägeranordnung verbunden ist.

Durch das Ausbilden des Freiraumes 20 ergibt sich zum einen gegenüber einem durchgehenden Fußschaft 4 eine Gewichtsersparnis, und zum anderen weist der Fußschaft 4 der erfindungsgemäßen Befestigungsvorrichtung eine verhältnismäßig hohe Flexibilität auf, die ein Einfügen in Ausnehmungen mit einer verhältnismäßig hohen Variabilität in den seitlichen Abmessungen gestattet. Dabei sind die Flügel 7, 8 insbesondere im Mittenbereich, in dem sie an die Mittenabschnitte 12, 13 der Randstege 5, 6 angesetzt sind, neben ihrer eigenen Flexibilität durch Zusammenbiegen der Randstege 5, 6 ebenfalls im Querschnitt deutlich verkleinerbar.

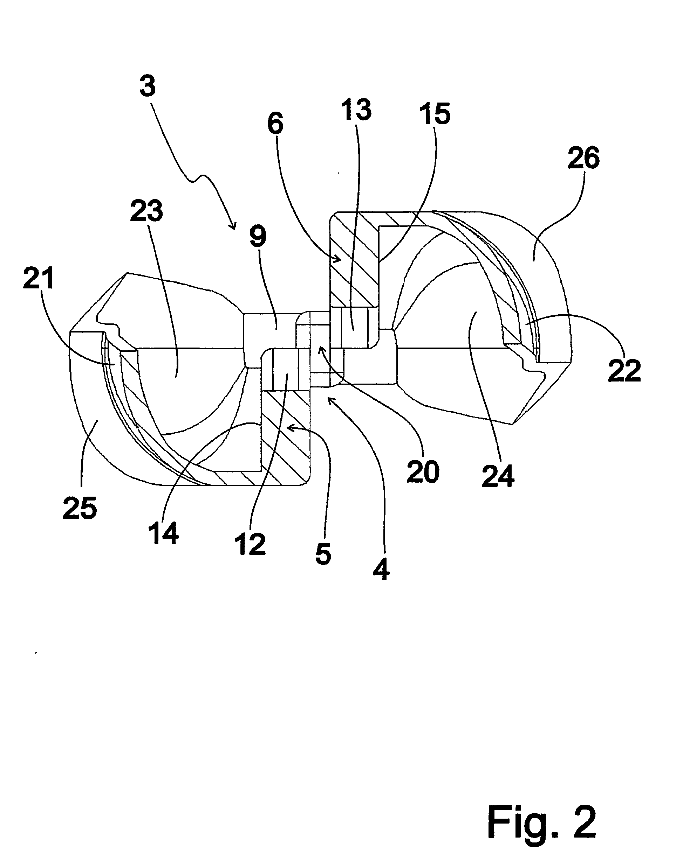

Fig. 2 zeigt einen Querschnitt durch den Rastfuß 3 des Ausführungsbeispieles von Fig. 1 im Bereich der Eintauchabschnitte 21, 22 mit Blick in Richtung des Fußsteges 9. Aus Fig. 2 ist ersichtlich, dass die Randstege 5, 6 gegenüber einer Mittelebene seitlich zueinander versetzt sind, so dass die erfindungsgemäße Befestigungsvorrichtung durch Spritzgießen verhältnismäßig einfach herzustellen ist.

## Patentansprüche

1. Befestigungsvorrichtung mit einem Rastfuß (3) zum Einfügen in eine Ausnehmung, wobei der Rastfuß (3) einen Fußschaft (4) mit einer Anzahl von jeweils mit einem Kopfteil (1) und mit einem Fußsteg (9) verbundenen Randstegen (5, 6) aufweist, zwischen denen ein Freiraum (20) ausgebildet ist und die sich von einem Kopfteil (1) wegweisend erstrecken, und über eine Anzahl von Flügel (7, 8), **dadurch gekennzeichnet, dass** jeder Flügel (7, 8) an einem ihm zugeordneten Randsteg (5, 6) angesetzt ist, wobei die Flügel (7, 8) jeweils mit einem an den Kopfabschnitt (14, 15) des jeweiligen Randsteges (5, 6) angesetzten Eintauchabschnitt (21, 22) ausgebildet sind, der sich in der von dem Kopfteil (1) wegweisenden Richtung im Umfang erweitert, wobei sich von dem jeweiligen Eintauchabschnitt (21, 22) in Richtung des jeweiligen Fußabschnittes (10, 11) jeweils ein Durchgriffsabschnitt (23, 24) fortsetzt, deren Umfänge sich in Richtung der Fußabschnitte (10, 11) wieder verringern und wobei im Übergangsbereich der Eintauchabschnitte (21, 22) und der Durchgriffsabschnitte (23, 24) mit dem größten Umfang des Rastfußes (3) in Richtung des Kopfteiles (1) ausgerichtete Rastflächen (25, 26) ausgebildet sind, die bei bestimmungsgemäßer Anordnung der erfindungsgemäßen Befestigungsvorrichtung die Trägeranordnung hintergreifen, so dass die Befestigungsvorrichtung fest mit der Trägeranordnung verbunden ist, dass jeder Randsteg (5, 6) einen nach außen gebogenen Mittenabschnitt (12, 13) aufweist und dass jeder Randsteg (5, 6) einen dem Kopfteil (1) zugewandten Kopfabschnitt (14, 15) mit einer gegenüber der übrigen Materialstärke größeren Materialstärke aufweist.

2. Befestigungsvorrichtung nach Anspruch 1, **dadurch gekennzeichnet, dass** die Randstege (5, 6) an ihren dem Kopfteil (1) abgewandten Enden über einen Fußsteg (9) des Fußschaftes (4) miteinander verbunden sind.

3. Befestigungsvorrichtung nach Anspruch 1 oder Anspruch 2, **dadurch gekennzeichnet, dass** die Randstege (5, 6) an ihren dem Kopfteil (1) zugewandten Enden an mit dem Kopfteil (1) in Verbindung stehende Verbindungsstücke (16, 17) angeformt sind.

4. Befestigungsvorrichtung nach einem der Ansprüche 1 bis 3, **dadurch gekennzeichnet, dass** zwei einander gegenüberliegende Randstege (5, 6) gegenüber einer Mittelebene versetzt angeordnet sind.

## Claims

1. Fixing device having a locking foot (3) for insertion into a recess, the locking foot (3) having a foot shaft (4) with a number of edge webs (5, 6) connected in each case to a top part (1) and to a foot web (9), between which a free space (20) is formed and which extend pointing away from a top part (1), and over a number of wings (7, 8), **characterized in that** each wing (7, 8) is mounted on an edge web (5, 6) coordinated with it, the wings (7, 8) each being formed with an immersion section (21, 22) which is mounted on the top section (14, 15) of the respective edge web (5, 6) and increases in circumference in the direction pointing away from the top part (1), in each case a penetration section (23, 24) continuing from the respective immersion section (21, 22) in the direction of the respective foot section (10, 11), the circumferences of which penetration sections decrease again in the direction of the foot sections (10, 11), and locking surfaces (25, 26) oriented "with the largest circumference of the locking foot (3) in the direction of the top part (1) being formed in the transition region of the immersion sections (21, 22) and of the penetration sections (23, 24), which locking surfaces, when the fixing device according to the invention is arranged in the intended manner, grip behind the support arrangement so that the fixing device is firmly connected to the support arrangement, that each edge web (5, 6) has a middle section (12, 13) bent outwards and that each edge web (5, 6) has a top section (14, 15) facing the top part (1) and having a greater material thickness than the remaining material thickness.

2. Fixing device according to Claim 1, **characterized in that** the edge webs (5, 6) are connected to one another at their ends facing the top part (1) via a foot web (9) of the foot shaft.

3. Fixing device according to Claim 1 or Claim 2, **characterized in that** the edge webs (5, 6) are formed, at their ends facing the top part (1) on connecting pieces (16, 17) connected to the top part (1).

4. Fixing device according to any of Claims 1 to 3, **characterized in that** two edge webs (5, 6) opposite one another are arranged offset relative to a central plane.

## Revendications

1. Dispositif de fixation comprenant une patte d'ancrage (3) destinée à être emmanchée dans un évidement, la patte d'ancrage (3) se composant en l'occurrence d'une tige formant pied (4) qui est constituée par un certain nombre de barrettes périphériques (5, 6) respectivement raccordées à un élément formant tête (1) et à un segment de pied (9), qui définissent entre elles un espace libre (20) et qui s'étendent en s'éloignant de l'élément formant tête (1), et par un certain nombre d'ailettes (7, 8), **caractérisé en ce que** chaque ailette (7, 8) est réalisée attenante à une barrette périphérique (5, 6) qui lui correspond, dispositif dans lequel les ailettes (7, 8) comportent respectivement une portion plongeante (21, 22) disposée attenante à la portion de tête (14, 15) de chacune des barrettes périphériques (5, 6), dont le périmètre s'évase dans la direction allant en s'éloignant de l'élément formant tête (1), dans lequel une portion d'engagement en prise (23, 24) fait respectivement suite à la portion plongeante correspondante (21, 22) dans la direction de la portion de pied respective (10, 11), dont les périmètres se réduisent à nouveau dans la direction des portions de pied (10, 11), et dans lequel il est prévu, dans la zone de transition entre les portions plongeantes (21, 22) et les portions d'engagement en prise (23, 24) des faces d'accrochage (25, 26), correspondant à la portion de plus grand périmètre de la patte d'ancrage (3), orientées dans la direction de l'élément formant tête (1), qui, dans l'agencement du dispositif de fixation selon l'invention tel qu'il correspond à sa destination, viennent cramponner par derrière l'agencement formant support, ce qui fait que le dispositif de fixation est solidement raccordé à l'agencement formant support, **en ce que** chaque barrette périphérique (5, 6) comporte une portion centrale (12, 13) cintrée vers l'extérieur et **en ce que** chaque barrette périphérique (5, 6) comprend une portion de tête (14, 15), orientée en direction de l'élément formant tête (1), dont l'épaisseur est plus importante comparativement à l'épaisseur de ses autres parties constitutives.

2. Dispositif de fixation selon la revendication 1, **caractérisé en ce que** les barrettes périphériques (5, 6) sont raccordées ensemble au niveau de leurs extrémités orientées à l'opposé de l'élément formant tête (1) par l'intermédiaire d'une barrette entretoise de liaison en pied (9) de la tige formant pied (4).

3. Dispositif de fixation selon la revendication 1 ou la revendication 2, **caractérisé en ce que** les barrettes périphériques (5, 6) sont, au niveau de leurs extrémités orientées en direction de l'élément formant tête (1), réalisées solidaires par moulage d'éléments de liaison (16, 17) eux-mêmes raccordés à l'élément formant tête (1).

4. Dispositif de fixation selon l'une des revendications 1 à 3, **caractérisé en ce que** deux barrettes périphériques (5, 6) respectivement diamétralement opposées sont agencées suivant une disposition décalée par rapport à un plan médian.
